Europäisches Patentamt

European Patent Office

Office européen des brevets

(11) Publication number: 0 515 686 A1

# EUROPEAN PATENT APPLICATION
## published in accordance with Art. 158(3) EPC

(21) Application number: 91909940.8

(22) Date of filing: 07.12.90

(86) International application number:
PCT/SU90/00272

(87) International publication number:
WO 92/10427 (25.06.92 92/14)

(51) Int. Cl.5: C02F 1/28

(43) Date of publication of application:
02.12.92 Bulletin 92/49

(84) Designated Contracting States:
AT BE CH DE ES FR GB IT LI LU NL SE

(71) Applicant: ENVIRON UMWELTSCHUTZ AG
Austrasse 27
FL-9490 Vaduz(LI)

(72) Inventor: Fominsky, Leonid Pavlovich
ul. Gagarina 08,24
Cherkassy, 257036(UA)

(74) Representative: Finck, Dieter et al
Patentanwälte v. Füner, Ebbinghaus, Finck
Mariahilfplatz 2 & 3
W-8000 München 90(DE)

(54) **METHOD OF WATER PURIFICATION.**

(57) A method of water purification provides for introducing into the water a sorbent-suspension obtained by electroerosive dispersion of ferrous metals in the water and containing no more than 3 % of magnetite, mixing and subsequent separation of the solid phase. The suspension is fed into the water at a quantity of 3 to 120 g of dry substance for 1 g of impurities. Mixing of the suspension with the water is effected at a temperature of 20-70 °C.

EP 0 515 686 A1

Field of the invention

The instant invention relates to a method of water purification.

State of the art

An electrocoagulation method for purifying waste water is known (V.M.Makarov, Yu.P. Belichenko et al. "Ratsional'noe ispol'zovanie i ochistka vody na mashinostroitel'nyh predpriyatiyah", M. Mashinostroenie, 1988, p. 159-170) in which sodium chloride is added to the waste water containing heavy metal impurities, and between iron electrodes electric current is passed through it. As a result of the electrolysis iron hydroxides are formed which sorb heavy metal impurities. The coagulated precipitate is separated from the water.

The method described is characterized by its high efficiency, and the consumption of iron is approximately 10 g per 1 g of impurities to be removed. However, with this method only ions of some metals, such as chromium, nickel, can be removed, whereas most of the other impurities (phosphates, nitrates, cyanides, copper, mecury and aluminium compounds) cannot be removed from the water. The sodium chloride used for the electrolysis further contaminates the water and the precipitate obtained. The electrocoagulation method is characterized by a high consumption of electric energy, for example 12 $kWh/m^3$, which is needed for purifying water containing 40 $g/m^3$ of chromium compounds (VI). Due to the passivation of the electrodes with impurities, the stability of the water purification process is affected.

The sirofloc process (sirofloc pilot) used for purifying drinking water in Australia is also known ("Water treatment using magnetite: a study of a Sirofloc pilot plant", Gregory R., Maloney, R.J., Stocklev M., J. Inst. Water and Environ. Manag., 1988, v.2, N 5, pp. 532-544). Highly dispersible magnetite prepared by mechanically grinding natural magnetite (iron ore) is used as the sorbent in this process. The ions of the heavy metals are sorbed on the magnetite particles and fill the vacancies in its defective crystal lattice. The magnetite powder is contacted with the water which is to be purified for approximately 3 minutes. Then the powder is separated from the water by means of a magnetic field. The advantages of the method as described reside in the quality of the sorbent used, i.e. magnetite. The magnetite powder can be stored over a long period of time and can be transported over any distance without its quality substantially deteriorating. Little time is needed for purifying the water.

However, for the realization of the process described only particularly pure kinds of magnetic iron ore being very finely milled (up to 1-10 microns) are required, which is difficult and expensive. Also, the natural magnetite powder does not remove all harmful impurities contained in the water. The sorption capability of the ground natural magnetite is much less than the theoretical, as not only the vacancies and defects of the crystal lattice which are formed as a result of the mechanical grinding of the natural magnetite to a powder take part in the purification of water.

A method for purifying aqueous iron chloride solutions containing 20-40 weight % of $FeCl_3$ from heavy metals (chromium, copper, mercury, arsenic, cadmium, lead) is known (JP, A, 53-82696). In this method the pH of the solution to be purified is adjusted to 3 by adding hydrochloric or sulfuric acid, and the dry iron powder is introduced. After mixing the precipitate obtained is separated from the cleaned aqueous iron chloride solution by filtration.

Due to the low sorption activity of the iron powder, the water is not purified to a high degree. For example, the aqueous iron chloride solution contained 18 mg/l of chromium (VI) before purification, and after purification 6 mg/l. A high amount of iron powder is needed for the method as described (400-600 g per 1 l of aqueous solution to be purified).

A method for purifying water from heavy metals (cadmium, zinc, copper, manganese, lead, mercury, iron and arsenic) is known (JP, A, 52-45665). At a pH of 5-7 a sorbent, i.e. dry iron powder, is introduced into waste water, and the mixture obtained is stirred, and the solid phase, ie. the precipitate, is separated by filtration. Absorption/coprecipitation reactions take place between the iron of the powder and the ions of the heavy metals.

By this method said metals can be removed from water to a high degree. The realization of this method does not require that complicated purification devices be built, and apparatus for preparing the powder be used, since the standard iron powder is used having a dispersibility of from 100 to 400 mesh (25-150 microns) and being produced by industry. However, the method described is characterized by a high consumption of iron powder for purifying water (60-300 g of iron per 1 g of impurities to be removed).

The high consumption of powder leads to an increase in the volumes and weights of the sludge obtained after the purification of waste water which increases environmental pollution.

Also, this method is characterized by its low efficiency and by its duration, as no less than 60 minutes

EP 0 515 686 A1

are required for mixing. By this method only individual heavy metal ions can be removed from the water, and it is not taught that it is possible to remove chromium ions which can often be found in waste water produced by the galvanization industry, or tin ions, aluminium ions, nitrates, sulfates and oil products from the water by means of this method.

Disclosure of the invention

The basis of the invention is the task to develop a method for purifying water by selecting such a sorbent based on iron which reduces the amount of iron needed, and at the same time provides for a high degree of water cleanliness and removal of a broader range of impurities, and which also enhances the rate and efficiency of the process.

This task is solved by the proposed method for purifying water comprising adding to the water a sorbent on the basis of iron, mixing, and subsequently separating the solid phase in which method, according to the invention, a suspension obtained by electroerosive dispersion of ferrous metals in water and containing no less than 3 weight % of magnetite is used as the sorbent.

The proposed method provides for
- a reduction of the amount of iron per unit of impurities to be removed from the water, for example heavy metals, up to 3-26 g/g,
- a reduction of environmental pollution with sludges by reducing the weight and volume of the sludges obtained by the purification of one volume unit of water,
- an increase in efficiency of the process for purifying water by increasing the rate of the process for purifying and by reducing the required mixing time to 3-5 min.
- an increase in the range of harmful impurities to be removed from the water, and thus broadening the field of application of the proposed method.

The advantages of the method set out above are provided for by the use of an aqueous suspension of iron powder as the sorbent, which contains no less than 3 weight % of magnetite. This is achieved by the fact that the powder particles obtained by electroerosive dispersion of ferrous metals (iron, carbon steel, cast iron) in water have a particular metal structure which is characterized by enhanced density of crystal lattice defects and by enhanced chemical activity. It is known that crystal lattice defects can be the centre of adsorption. This may be one of the reasons for the enhanced sorption activity of the proposed sorbent. It has to be pointed out that during the electroerosive dispersion carbon and other impurities present in steel and cast iron are burned out.

The enhanced sorption activity of the powder is also achieved by the presence of magnetite which is formed as a result of an intensive chemical reaction of the activated iron prepared by electroerosive dispersion with water which is accompanied by the production of hydrogen. This newly formed magnetite exhibits enhanced sorption activity as compared with usual iron, as well as with usual magnetite. A magnetite content in the suspension of less than 3 weight % does not provide for substantial increase in the rate at which the water is purified.

The high sorption activity of the iron powder in the suspension is also provided for by its high dispersibility which is 0.1-10 microns. An increase in the dispersibility leads to an increase in specific surface of the powder and in the rate at which it reacts with the impurities being present in the water. Dry iron powder used in the known method according to JP, A, 52-45665, having such a high dispersibility (less than 10 microns) cannot be used for the purification of water as it self-ignites very quickly if contacted with air, or oxidizes, and thus converts into inert hematite which does not adsorb impurities from water.

In order to provide for optimum conditions for the purification of water, it is advisable to introduce the suspension into the water which is to be purified in an amount of 3 to 120 g based on the dry substance per 1 g of impurities which are to be removed. The lower border figure of 3 g/g of the range indicated is selected such that it equals the sorption capacity of the suspension, above the upper border figure of 120 g/g no considerable increase in the degree and rate of the water purification is obtained.

It is preferred in order to increase the rate and efficiency of the purifying process that the suspension and the water to be purified are mixed at a temperature of from 20 to 70°C. If the temperature exceeds 70°C, the purifying rate is reduced.

It is recommended that no less than 50 weight % of the separated solid phase containing iron, magnetite and sorbed impurities is directed to the step at which the suspension is added to the water and is employed as the sorbent in the mixture with the suspension. This makes it possible to effectively use the suspension by increasing the utilization factor of its sorption capacity.

It is advisable to loosen the suspension before it is introduced into the water to be purified by ultrasonic treatment which provides for an enhanced specific surface of the iron powder taking part in the sorption

3

process by destroying conglomerates which form when the suspension is stored and transported.

The solid phase should be separated by means of a magnetic field which leads to magnetization of the ferromagnetic particles of the suspension. Consequently, they quickly coagulate and form conglomerates, and thus enhance the effectivity of the following settling and/or filtration purifying process.

It is recommended that the suspension is boiled before it is introduced into the water to be purified, so that it is desinfected before being used, for example, for purifying drinking water or before long-term storing. When boiled, the rate at which magnetite forms is substantially increased, and after the boiling the production of hydrogen during the storing process is considerably reduced.

Short description of the drawings

A detailed description of the method of water purification according to the invention is set out below, with reference being made to the drawings schematically showing the assembly for realizing the proposed method.

Preferred embodiment

The assembly comprises a tank/reservoir 1 for the water to be purified, a pipe 2, a pump 3, three vessels 4 for mixing the suspension with the water to be purified, a hydrocyclone 5, a device 6 for magnetic treatment, a settling tank 7, a pump 8 for feeding the water, a filter 9, and a tank/reservoir 10 which are all connected with each other and are assembled in technological order. A valve 11 is mounted to the pipe 2 at the outlet portion of tank 1. Tank 13 having a stirrer for the suspension and device 14 for the ultrasonic treatment of the suspension are mounted in technological order to pipe 2 at the inlet portion of pump 3 by means of pipe 12. Valve 15 is mounted to the outlet of the device 14 leading into pipe 12. Hydrocyclone 5 is connected at its outlet by means of pipe 16 to pipe 2 at the inlet of pump 3. A tray 17 for the sludge is provided for beneath the settling tank 7. The settling tank 7 is provided with taps 18.

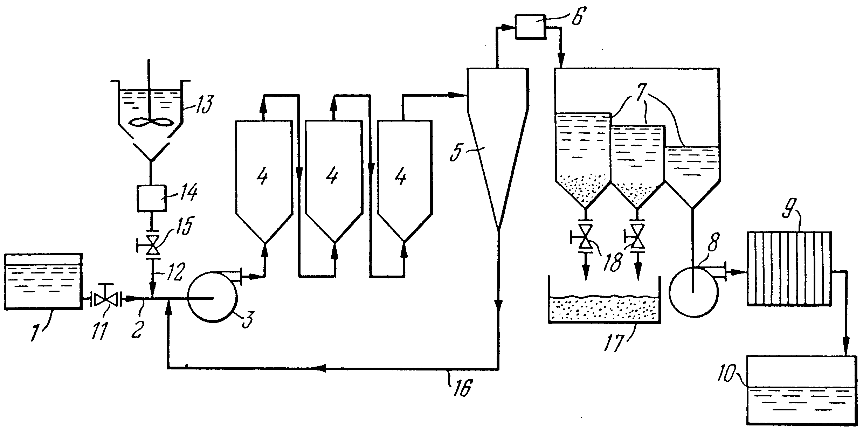

For the purification of water a suspension is used which is prepared by electroerosive dispersion of iron in water. The suspension is prepared by using the device described in SU, A, 63515, which is not shown in the drawing. It comprises a tank made from dielectric material, and having two plane steel electrodes to which electrical voltage impulses are applied. Between the electrodes granules of reduced (metallized) iron ore pellets having a size of approximately 10 mm are charged. A mesh hole is provided for at the bottom of the tank through which a stream of water is fed which moves the layer of granules. When current is applied between the electrodes, electricity is discharged in the water along the chains consisting of granules, and as a result of this electroerosive dispersion of the metal of the granules and electrodes takes place. The specific losses of energy resulting from the dispersion are 4 kWh per 1 kg of metal. The electroerosion products which are a suspension of highly dispersed ferrous powder ($\leq$ 1 micron) suspended in water leave the tank with a stream of water, and are collected in a settling tank where they are maintained until hydrogen bubbles start to emerge from said suspension, which form foam on its surface. At the same time the iron in the suspension starts to convert into magnetite. The time during which it is kept and the amount of magnetite formed are shown in Table 1. After that the suspension which concentrates in the lower part of the settling tank is filled into the tanks in which it is brought to the site where waste water is purified. The suspension is used for the purification of waste water produced by galvanization industry, and its chemical composition is indicated in Table 1.

The water is purified by means of an assembly shown in the drawing. The water which is to be purified is collected in tank 1, and the suspension is poured into tank 13. The ratio of the solid and aqueous phase (T:G) is shown in Table 1. Pump 3 is turned on, valves 11 and 15 are smoothly opened, and thus the desired amounts of water $Q_1$ and suspension $Q_2$, respectively, are determined. From tank 13 the suspension which is constantly mixed with the stirrer is fed through pipe 12 into apparatus 14 in which it is treated with ultrasound so that it becomes homogeneous and in order to enhance its sorption activity. Furthermore, the suspension running through pipes 12 and 2, and the water to be purified running through pipe 2 are successively fed with pump 3 to each of the three tanks 4. The suspension and the water are mixed in them by the ascending stream. The ratio T:G of the suspension in the tanks 4 is shown in Table 1. The particles of the suspension absorb the metal ions and other impurities from the water. The total volume of the tanks 4 is selected such that it equals the volume of water to be purified by the instant assembly within 3 minutes. The water and the suspension suspended therein leave the last tank 4 and enter hydrocyclone 5 in which the precipitate is condensed to form a pulp. The pulp travels at consumption rate $Q_3$ through pipe 16 out of hydrocyclone 5, enters pipe 2 and is further sucked in by pump 3, and thus dilutes the starting suspension. The ratio T:G in the pulp is shown in Table 1. The purified water with the residues of suspension from hydrocyclone 5 enters device 6 where the particles of the suspension are magnetized by a magnetic field, and partially coagulated. From device 6 the water travels to settling tank 7 where the suspension quickly precipitates and the precipitate is periodically discharged onto tray 17 via taps 18. This precipitate is buried, and utilized. By means of pump 8 the purified water from settling tank 7 is fed to filter 9 having a filter fabric made from belting where the suspension residues are removed from the water. From filter 9 the water enters tank/reservoir 10 designed for the purified water.

In Table 1 shown below the process parameters, characteristic features of the suspension and amount of impurities in the water prior to purification and after purification are set out.

Table 1

| Parameters | Proposed Method | | Known Method |
|---|---|---|---|
| 1 | 2 | 3 | 4 |
| Time for maintaining suspension, hours | 3 | 24 | - |
| Amount of magnetite in the solid phase of suspension, wt.% | 3 | 10 | - |
| Ratio T:G in suspension, parts by weight | 1:9 | 1:6 | - |
| Consumption of water $Q_1$, $m^3$/hr | 8 | 17 | - |
| Consumption of suspension $Q_2$, l/hr | 143 | 226 | - |
| Time for mixing suspension with water, min. | 6 | 3 | 60 |
| Consumption of iron, g: per 1 $m^3$ of water to be purified | 1785 | 1902 | 180000 |
| per 1 g of impurities to be removed from water | 3 | 6 | 300 |
| Consumption of reversing pulp $Q_3$, $m^3$/hr | 2 | 4 | |
| Concentration of solid phase in the reversing pulp, g/l | 21.4 | 44.5 | |
| Concentration of solid phase in the vessels 4 g/l | 5.7 | 10.0 | |

Table 1 continued:

Concentration of
impurities in water,
mg/l
prior to purification/
after purification

| | | | |
|---|---|---|---|
| chromium | 234/0.07 | 180/0.01 | 234/180 |
| cadmium | 78/0.43 | 1.8/0.01 | 78/0.5 |
| zinc | 25/0.28 | 17/0.005 | 25/0.9 |
| aluminium | 16/0.05 | 13/0.05 | 16/12 |
| tin | 7/0.09 | 4.4/0.05 | 7/5 |
| lead | 3/0.2 | 0.45/0.03 | 3/0.3 |
| nickel | 26/0.18 | 56/0.05 | 26/20 |
| copper | 150/0.69 | 42.5/0.05 | 149/6 |
| iron | 53/0.5 | 2.4/0.005 | 55/50 |
| oil products | 8/0.1 | 6/0.1 | |

Example 1

Eight 0.5 l waste water samples are used, with their chemical composition of impurities being set out in Table 2. For removing impurities from them some drops of suspension are added to the glasses (0.5 l) containing this water, the suspension being prepared in accordance with the technology described above, the difference being that pieces of carbon steel are treated by electroerosive dispersion. The concentration of the suspension (T:G) is 1:2, and the amount of magnetite in the solid phase of the suspension is shown in Table 2. The number of drops of suspension added to the water which is to be purified is set out in Table 2. The volume of one drop is approximately 0.3 ml. After that the contents of the glasses are mixed with a glass stick for a period of time shown in Table 2, and the water is allowed to settle for 10 minutes. After that the purified water is carefully poured out and filtered with a filling funnel through filter paper. The purified water obtained is analyzed by photocolorimetry and polarography. The results of the experiments are set out in Table 2.

Table 2

| Parameters | Samples | | | | | | | |
|---|---|---|---|---|---|---|---|---|
| | 1 | 2 | 3 | 4 | 5 | 6 | 7 | 8 |
| 1 | 2 | 3 | 4 | 5 | 6 | 7 | 8 | 9 |
| Amount of magnetite in the solid phase of the suspension, weight % | 30 | 30 | 40 | 50 | 50 | 50 | 50 | 50 |
| Number of drops of suspension | 3 | 2 | 2 | 2 | 25 | 1 | 7 | 14 |
| Mixing time, min. | 1 | 3 | 3 | 3 | 3 | 3 | 3 | 3 |
| Consumption of iron, mg: per 1 $dm^3$ of water to be purified | 180 | 120 | 120 | 120 | 1500 | 60 | 420 | 820 |
| per 1 mg of impurities | 8 | 5 | 5 | 5 | 3 | 12 | 3 | 2 |
| Concentration in water, mg/l prior to purification/after purification | | | | | | | | |
| chromium $6^+$ | 22/0.1 | 22/0.05 | | | | | 84/6.5 | |
| nickel | | | 32/0.1 | | | | | |
| lead | | | | 30/0.03 | | | | |
| copper | | | | | 500/0.1 | | | |
| mercury | | | | | | | | |
| iron | 0/0.1 | 0/0.05 | 0/0.08 | 0/0.05 | 0/0.1 | 0/0.05 | 13/0.05 | 0.8/0.3 |

Example 2

Five samples of 0.5 l water containing radionuclide impurities 90Sr and 90Y having a degree of radioactivity of $(1-8) \cdot 10^{-7}$ Ku/l are used. All the water purification operations are carried out as in Example 1, the only difference being that the purification is carried out in a glass having a volume of 0.05 l, the suspension is prepared by electroerosive dispersion of gray iron in water, and the content of solid phase in one drop of suspension is approximately 30 mg. The parameters and results of the water purification are shown in Table 3.

Table 3

| Parameters | Samples | | | | |
|---|---|---|---|---|---|
| | 1 | 2 | 3 | 4 | 5 |
| 1 | 2 | 3 | 4 | 5 | 6 |
| Number of drops of suspension | 1 | 2 | 3 | 10 | 20 |
| Activity of water x $10^7$, Ku/l | | | | | |
| prior to purif. | 1.66 | 1.55 | 1.61 | 1.6 | 1.5 |
| after purification | 0.07 | 0.05 | 0.05 | 0.04 | 0.04 |

Example 3

The purification of two batches of drinking water is carried out with the assembly shown in the drawing and described above. The starting water which is to be purified is poured into vessel 1, and the suspension prepared by electroerosive dispersion of Armco iron in water by means of the technique described above is poured into vessel 13, the difference being that the suspension is boiled for one hour before it is poured into vessel 13 so that bacteria and other microorganisms contained in the suspension are destroyed. The process parameters of the purification and the results are shown in Table 4.

Table 4

| Parameters | Results of batches | | Requirements drinking water has to meet |
|---|---|---|---|
| | 1 | 2 | |
| 1 | 2 | 3 | 4 |
| Maintaining time of suspension, hr: | | | |
| before boiling | 1000 | 24 | |
| after boiling | | 1000 | |
| Contents of magnetite in the solid phase of the suspension, wt.% | | | |
| before boiling | 40 | 8 | |
| after boiling | 60 | 20 | |
| Rate of gas release from suspension, ml/hr kg: | | | |
| before boiling | 0.1 | 2.3 | |
| after boiling | 0.05 | 0.2 | |
| Ratio T:G in suspension parts by weight | 1:9 | 1:9 | |
| Consumption of water $Q_1$, $m^3$/hr | 8 | 8 | |
| Consumption of suspension $O_2$, kg/hr | 16 | 8 | |
| Time for mixing suspension with water, min. | 3 | 6 | |
| Consumption of iron, g: per 1 $m^3$ of water to be purified | 200 | 100 | |
| per 1 g of impurities from water | 10 | 5 | |
| Consumption of reversing pulp, $Q_3$, $m^3$/hr | 1 | 1 | |

Table 4 continued:

| | | | |
|---|---|---|---|
| Concentration of solid in the reversing pulp, g/l | 20 | 20 | |
| Concentration of solid in vessels 3, g/l | 2.4 | 2.3 | |
| Characteristics of water prior to purification/after purification: | | | |
| Turbidity, mg/l | 19/0.9 | 19/0.9 | 1.5 |
| Transparence, cm | 7/30 | 7/30 | 30 |
| pH | 6.7/7.0 | 6.7/7.2 | 6.0-9.0 |
| Hardness mg-equ./l | 3.8/2.9 | 3.8/3.0 | 7.0 |
| Concentration of impurities, mg/l: | | | |
| iron | 3.6/0.2 | 3.6/0.1 | 0.3 |
| manganese | 0.425/0.02 | 0.425/0.01 | 0.1 |
| copper | 0.65/0.02 | 0.65/0.01 | 0.1 |
| lead | 0.1/0.001 | 0.1/0.002 | 0.03 |
| aluminium | 1.2/0.01 | 1.2/0.008 | 0.02 |
| zinc | 4.0/0.03 | 4.0/0.02 | 5.0 |
| mercury | 1.2/0.0007 | 1.2/0.0006 | 0.001 |
| chromium $6^+$ | 1.0/0.005 | 1.0/0.004 | 0.05 |
| oil products | 2.0/0.05 | 2.0/0.1 | 1.9 |
| chlorine | 0.1/0.001 | 0.1/0.005 | |
| fluorine | 0.63/0.2 | 0.63/0.25 | 0.2 |
| nitrates | 4.5/3.9 | 4.5/5 | 40 |

Industrial applicability

The method is used for removing heavy and light metal ions, radionuclides, nitrates, phosphorous compounds and traces of oil products from water.

**Claims**

1. Method of water purification comprising introducing a sorbent on the basis of iron into it, mixing, and subsequently separating the solid phase, **characterized** in that a suspension prepared by electroerosive dispersion of ferrous metals in water and containing no less than 3 wt.% of magnetite is used as the sorbent.

2. Method according to Claim 1, **characterized** in that said suspension is introduced into the water to be purified in an amount of 3 to 120 g based on the dry substance per 1 g of impurities to be removed.

3. Method according to Claims 1 and 2, **characterized** in that the mixing of the suspension with the water which is to be purified is carried out at a temperature of from 20 to 70° C.

4.  Method according to Claim 1, **characterized** in that no less than 50 wt.% of separated solid phase containing iron, magnetite and sorbed impurities is directed to the process step at which said suspension is introduced into the water, and is used as a sorbent in the mixture with this suspension.

5.  Method according to Claim 1, **characterized** in that said suspension is loosened by ultrasonic treatment before it is introduced into the water to be purified.

6.  Method according to Claim 1, **characterized** in that the solid phase is separated by means of a magnetic field.

7.  Method according to Claim 1, **characterized** in that said suspension is boiled before it is introduced into the water to be purified.

# INTERNATIONAL SEARCH REPORT

International Application No PCT/SU 90/00272

**I. CLASSIFICATION OF SUBJECT MATTER** (if several classification symbols apply, indicate all) *

According to International Patent Classification (IPC) or to both National Classification and IPC

IPC⁵ C 02 F 1/28

**II. FIELDS SEARCHED**

| | Minimum Documentation Searched 7 |
|---|---|
| Classification System | Classification Symbols |
| IPC⁵ | C 02 F 1/28, 1/58 + 1/64 |

Documentation Searched other than Minimum Documentation
to the Extent that such Documents are Included in the Fields Searched 8

**III. DOCUMENTS CONSIDERED TO BE RELEVANT 9**

| Category * | Citation of Document, 11 with indication, where appropriate, of the relevant passages 12 | Relevant to Claim No. 13 |
|---|---|---|
| A | JP, A, 53-137069, 30 November 1978 (30.11.78) | 1,2 |
| A | US, A, 3960723, (FORD MOTOR COMPANY), 1 June 1976 (01.06.76) | 1 |
| A | JP, A, 53-82696, 21 July 1978 (21.07.78) | 1 |
| A | AU, B, 82365/82, (COMMONWEALTH SCIENTIFIC AND INDUSTRIAL RESEARCH ORGANIZATION), 14 October 1982 (14.10.82) | 1 |
| A | US, A, 4565633 (HARZA ENGINEERING COMPANY) 21 January 1986 (21.01.86) | 1,3 |
| A | JP, B2, 62-16716, 14 April 1987 (14.04.87) | 4 |
| A | JP, B2, 53-36712, 4 October 1978 (04.10.78) | 6 |
| A | SU, A1, 1101294 (Nauchno-issledovatelsky institut kamnya i silikatov) 7 July 1984 (07.07.84) | 5 |
| A | SU, A1, 947044, (Kavkazsky institut mineralnogo syrya im. A.A. Tvalchrelidze) 30 July 1982 (30.07.82) | 7 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 8 August 1991 (08.08.91) | 28 August 1991 (28.08.91) |
| International Searching Authority | Signature of Authorized Officer |
| ISA/SU | |

Form PCT/ISA/210 (second sheet) (January 1985)